# EUROPÄISCHE PATENTSCHRIFT

(11) **EP 0 514 686 B1**
(45) Veröffentlichungstag und Bekanntmachung des Hinweises auf die Patenterteilung: **16.08.1995**
(21) Anmeldenummer: 92107088.4
(22) Anmeldetag: 25.04.1992
(51) Int. Cl.: H01S 3/102, G02F 2/02, H01S 3/06, H01S 3/094, H01S 3/23, H04B 10/00, H04J 14/00

(54) **Optisches Nachrichtenübertragungssystem mit optischer Steuerung eines optischen Verstärkers oder Wellenlängenkonversion der optischen Signale**
Optical information transmission system with optical control of an optical amplifier or with wavelength conversion of the optical signal
Système de transmission optique d'informations avec control optique d'un amplificateur optique ou avec conversion de longueur d'onde du signal optique

(30) Priorität: 18.05.1991 DE 4116433
(43) Veröffentlichungstag der Anmeldung: 25.11.1992
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Rolf, Dr., D-71732 Tamm (DE)
(74) Vertreter: Kugler, Hermann, Dipl.-Phys.

(56) Entgegenhaltungen:
- ECOC 1989 Bd. 1, 10. September 1989, Gothenburg, SS. 86-89; B. WEDDING et al.: '5 GBIT/S TRANSMISSION OVER 146 KM USING ERBIUM-DOPED FIBRE AMPLIFIER', TuA5-7
- ELECTRONICS LETTERS Bd. 26, Nr. 22, 25. Oktober 1990, Enage, GB, SS. 1871-1873; C.A. MILLAR et al.: 'Efficient up-conversion pumping at 800 nm of an erbium-doped fluoride fibre laser operating at 850 nm'
- JOURNAL OF LIGHTWAVE TECHNOLOGY Bd. 9, Nr. 2, Februar 1991, New York, US, SS. 234-250; XP000225314; W.J. MINISCALCO: 'Erbium-Doped Glasses for Fiber Amplifiers at 1500 nm'

## Beschreibung

Die Erfindung betrifft ein optisches System nach dem Oberbegriff des Patentanspruchs 1. Unter einem "optischen System" wird im folgenden eine Kombination verschiedener optischer Vorrichtungen, wie z.B. Lasern, Lichtwellenleitern, faseroptischer Verstärker, verstanden, die miteinander zusammenwirken, wobei sie räumlich weit voneinander entfernt angeordnet sein können.

Aus "ECOC ′89, Fifteenth European Conference on Optical Communication", September 10 - 14, 1989, Gothenburg, Sweden, Proceedings, Vol. 1, Regular Papers TuA5-7, Seiten 86 - 89 ist ein optisches System mit den im Oberbegriff des Patentanspruchs 1 genannten Merkmalen bekannt. Es ist ein optisches Nachrichtenübertragungssystem. Die laseraktive Substanz, die im faseroptischen Verstärker verwendet ist, besteht aus Er³⁺-Ionen, die als Dotiermittel in einem Lichtwellenleiterstück enthalten sind. Der das Pumplicht erzeugende erste Laser ist ein Kr⁺-Gas laser, und die Pumplicht-Wellenlänge beträgt 530,9 nm. Der zweite Laser ist weit entfernt von dem faseroptischen Verstärker angeordnet. Das von ihm emittierte Licht hat eine Wellenlänge von 1537 nm und wird durch den faseroptischen Verstärker verstärkt. Als Mittel, um das von dem zweiten Laser erzeugte Licht in den faseroptischen Verstärker einzukoppeln, dient ein Lichtwellenleiter, der über 70 km lang ist.

Der zweite Laser erzeugt Licht, das in seiner Intensität durch das zu übertragende elektrische Nachrichtensignal moduliert ist. Er wird daher als der Sendelaser des optischen Nachrichtenübertragungssystems bezeichnet.

Für die vorliegende Erfindung kommt es auf eine Modulation des vom zweiten Laser erzeugten Lichts und auf einige spezielle Eigenschaften des bekannten optischen Systems, z.B. die räumliche Entfernung seiner verschiedenen Komponenten, nicht an. Wesentlich ist nur, daß es einen optischen Verstärker mit einem Pumplaser hat und daß ein zweiter Laser vorhanden ist, dessen Ausgangslicht in den optischen Verstärker eingekoppelt und dort verstärkt wird.

Es ist die Aufgabe der Erfindung, das System mit den im Oberbegriff des Patentanspruchs 1 genannten Merkmalen so auszugestalten, daß sich neue Anwendungsmöglichkeiten ergeben, die Vorteile haben gegenüber für dieselben Anwendungsfälle bisher eingesetzte Lösungen.

Die Aufgabe wird wie im Patentanspruch 1 angegeben gelöst. Das Prinzip der Lösung ist: Es ist ein dritter Laser vorhanden, dessen Licht zusätzlich zu dem vom zweiten Laser kommenden Licht in den faseroptischen Verstärker eingekoppelt wird, um dadurch die Verstärkung des vom zweiten Laser kommenden Lichts zu steuern. Es handelt sich also um eine optische Steuerung der in einem optischen Verstärker stattfindenden Verstärkung. Die dritte Wellenlänge ist so zu wählen, daß durch Absorption von Licht mit der dritten Wellenlänge die Besetzung des metastabilen Energieniveaus, von dem aus die induzierte Emission von Licht mit der zweiten Wellenlänge stattfindet, steuerbar ist, d.h. die aufgrund des Pumplichts (λ₁) erfolgende Verstärkung des Lichts mit der zweiten Wellenlänge (λ₂), ist in Abhängigkeit von der Intensität des Lichts mit der dritten Wellenlänge (λ₃) steuerbar.

Der Anspruch 2 lehrt eine Ausgestaltung des erfindungsgemäßen Systems, die eine interessante Anwendung der Erfindung zur Wellenlängenkonversion in optischen Nachrichtenübertragungssystemen ermöglicht. Dabei ist der das verstärkbare Licht erzeugende zweite Laser - im Gegensatz zu dem eingangs genannten bekannten System - ein Laser, der unmoduliertes Licht aussendet, und der dritte Laser ist ein Laser, der durch Nachrichtensignale moduliertes Licht aussendet. Da dessen Modulation die Verstärkung des vom zweiten Laser ausgesendeten Lichts steuert, überträgt sie sich auf die Intensität des am Ausgang des optischen Verstärkers erscheinenden Lichts mit der zweiten Wellenlänge. In anderen Worten: Das optische Eingangssignal mit der dritten Wellenlänge ist in ein optisches Ausgangssignal mit der zweiten Wellenlänge umgewandelt. Vorteilhaft an einem so ausgestalteten und zur Wellenlängenkonversion verwendeten System ist, daß die Wellenlängenkonversion durch rein optische Mittel geschieht, anstatt daß Licht der ersten Wellenlänge in eine Photodiode zunächst in einen Strom umgewandelt und dieser Strom zum Betreiben eines Lasers benutzt wird, der Licht der gewünschten Wellenlänge emittiert.

Ein solches System ist für die optische Nachrichtenübertragung aus folgenden Gründen vorteilhaft: Es erlaubt die Verwendung eines preisgünstigen Sendelasers für das optische Nachrichtenübertragungssystem, z.B. eines Lichtsignals im Wellenlängenbereich um 850 nm emittierenden Halbleiterlasers, in Verbindung mit einem bei einer Wellenlänge von 1550 nm transparenten Lichtwellenleiter, der bei dieser Wellenlänge nur eine geringe Dämpfung hat. Durch die Umwandlung der von dem Sendelaser ausgestrahlten Lichtsignale in Lichtsignale mit einer Wellenlänge von 1550 nm ist dafür gesorgt, daß das zu übertragende optische Signal die zur Übertragung über lange Strecken geeignete Wellenlänge hat. Dieser Vorteil tritt bei einer Ausgestaltung des Systems gemäß den Patentansprüchen 4 und 5 noch deutlicher hervor. Dort sind mehrere Sendelaser vorhanden, die Licht mit der dritten Wellenlänge emittieren, vorzugsweise Licht der Wellenlänge 850 nm. Die emittierten Lichtsignale werden über je einen Lichtwellenleiter zu einem optischen Multiplexer übertragen, der sie zu einem Multiplex-Lichtsignal zusammenfaßt. Dieses Multiplex-Lichtsignal steuert dann die Verstärkung von unmoduliertem Licht aus dem zweiten Laser, wodurch seine Wellenlänge in die Wellenlänge des zweiten Lasers, z.B. 1550 nm, umgewandelt wird.

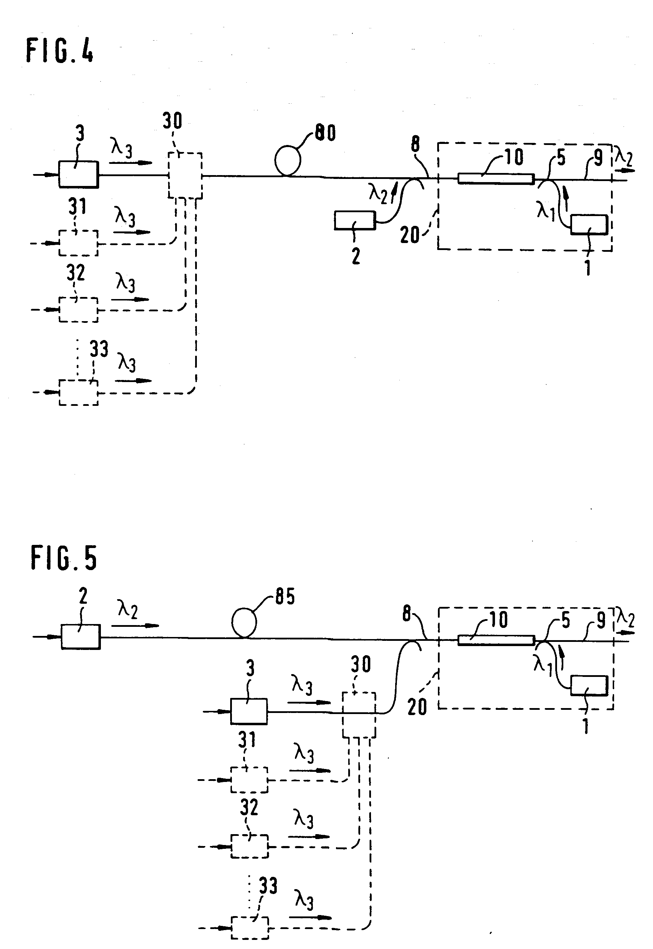

Gemäß dem Anspruch 3 und dem Ausführungsbeispiel nach Fig. 5 gehört auch eine Ausgestaltung des optischen Systems zur Erfindung, bei der der zweite Laser, dessen Ausgangslicht im optischen Verstärker verstärkt wird, der Signal-Sendelaser eines optischen Nachrichtenübertragungssystems ist. Die Verstärkung des Signallichts kann dann mit Hilfe des dritten Lasers optisch gesteuert werden. Die Erfindung kann also verwendet werden, wann immer eine Steuerung oder Regelung der Verstärkung eines zu übertragenden optischen Signals erforderlich ist. Moduliert man das vom dritten Laser ausgesendete Licht durch ein elektrisches Zusatzsignal, z.B. ein Signal aus einem Dienstkanal, so bewirkt die davon abhängige Steuerung der Verstärkung des vom zweiten Laser stammenden optischen Signals, daß diesem das Zusatzsignal aufmoduliert wird.

Gemäß dem Anspruch 6 kann ein Modulationssignal oder Steuersignal auch aus optischen Signalen von mehreren Lasern mit derselben Wellenlänge λ₃ gebildet werden, so daß das zu übertragende Nachrichtensignal vom zweiten Laser entweder durch mehrere Steuersignale steuerbar ist oder durch mehrere Zusatzsignale zusätzlich modulierbar ist.

Im folgenden wird die Erfindung anhand von Zeichnungen, die Ausführungsbeispiele zeigen, näher erläutert.

Es zeigen :
- Fig.1: den Grund-Aufbau des erfindungsgemäßen optischen Systems,
- Fig.2: am Beispiel von Er³⁺-Ionen als laseraktiver Substanz einige Energieniveaus und Zustandsübergänge, von denen die Erfindung Gebrauch macht,
- Fig.3: ein Ausführungsbeispiel der Erfindung, bei dem zum Steuern der Verstärkung im optischen Verstärker mehrere Laser vorhanden sind,
- Fig.4: eine Anwendung der Erfindung zum Umwandeln der Wellenlänge des zur übertragenden optischen Signals und
- Fig.5: eine Anwendung der Erfindung zur Steuerung der Verstärkung eines zu übertragenden optischen Signals oder zu dessen Modulation durch ein zusätzliches Signal.

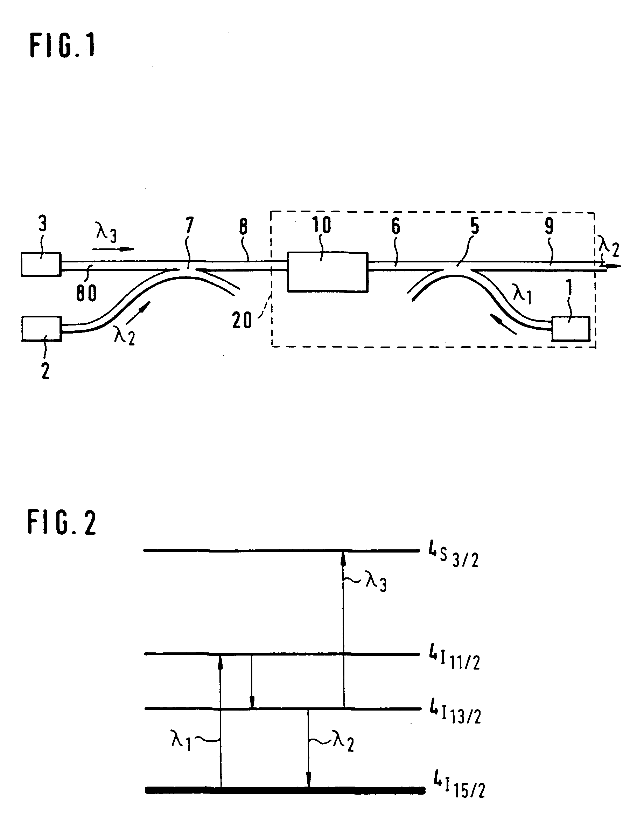

Das optisches System nach Fig.1 enthält einen optischen Verstärker, der durch eine gestrichelte Umrandung hervorgehoben und mit dem Bezugszeichen 20 versehen ist. Der optische Verstärker ist in eine Lichtwellenleiter-Strecke eingefügt. Von einem Lichtwellenleiter 8 empfängt er sein zu verstärkendes optisches Eingangssignal, und über einen Lichtwellenleiter 9 gibt er sein optisches Ausgangssignal aus, das zu einem nicht gezeigten optischen Empfänger übertragen wird. Aufgrund seiner Laser-Funktion, die der optische Verstärker 20 hat, gibt er Licht mit einer bestimmten Wellenlänge, das er an seinem Eingang empfängt, mit verstärkter Intensität und derselben Wellenlänge an seinem Ausgang aus. In Fig.1 ist mit λ₂ eine solche Wellenlänge angegeben, und es ist ein Laser 2 dargestellt, der Licht mit einer solchen Wellenlänge erzeugt.

Der optische Verstärker 20 enthält ein Medium 10, das eine laseraktive Subtanz, z.B. Er³⁺-Ionen enthält. Vorzugsweise ist das Medium 10 ein Lichtwellenleiterstück, das mit der laseraktiven Substanz, z.B. Er³⁺-Ionen, dotiert ist. Das Lichtwellenleiterstück hat als Grundmaterial das der üblichen Lichtwellenleiter, also SiO₂. Es kann aber auch eines mit einem anderen Grundmaterial, z.B. Fluorzirkonat, sein. Die laseraktive Substanz kann auch ein anderes Element als Erbium, insbesondere ein anderes Selten-Erd-Element, sein. Sie muß nicht als Dotiermaterial in dem Lichtwellenleiterstück vorkommen. Sie kann in bestimmten Fällen auch das Material des Mediums 10 selbst sein, so daß das Medium 10 aus der reinen laseraktiven Substanz besteht. Vorzugsweise ist das Medium 10 ein mit einer laseraktiven Substanz dotiertes Lichtwellenleiterstück, und in diesem Falle nennt man den optischen Verstärker: faseroptischer Verstärker.

Der optische Verstärker 20 enthält ferner einen Laser 1, üblicherweise Pumplaser genannt, der Pumplicht mit einer Wellenlänge λ₁ erzeugt. Er ist über einen Lichtwellenleiterkoppler 5 und ein Lichtwellenleiterstück 6 mit dem die laseraktive Substanz enthaltenden Medium 10, z.B. einem Er³⁺-dotierten Lichtwellenleiterstück, verbunden. Die Wellenlänge λ₁ des Pumplichts und die Wellenlänge λ₂ des zu verstärkenden Eingangslichts des optischen Verstärkers entsprechen Abständen der Energieniveaus der laseraktiven Substanz, wie anhand von Fig.2 noch erläutert wird. Betrachtet man den Laser 2 als den das zu übertragende optische Signal eines Nachrichtenübertragungssystems bereitstellenden Laser, so entspricht der bisher beschriebene Teil des optischen Systems nach Fig.1 dem eingangs genannten bekannten optischen Nachrichtenübertragungssystem.

Für die Erfindung spielt es allerdings keine Rolle, ob der Laser 2 die Signalquelle eines optischen Übertragungssystems ist. Im Prinzip kommt es nur darauf an, daß er Licht erzeugt, das in dem optischen Verstärker verstärkbar ist, gleichgültig ob dieses unmoduliert oder durch Nachrichtensignale moduliert ist. Im folgenden wird der Pumplaser 1 als "erster Laser" und der das verstärkbare Licht erzeugende Laser 2 als "zweiter Laser" des optischen Systems bezeichnet. Der Einfachheit wegen wird für jegliche optische Strahlung, also auch für solche mit Wellenlängen außerhalb des sichtbaren Bereichs, der Ausdruck "Licht" verwendet.

Gemäß der Erfindung enthält das optische System nach Fig.1 einen dritten Laser 3, dessen Ausgangslicht mit einer Wellenlänge λ₃ in das die laseraktive Substanz enthaltende Medium 10 eingestrahlt wird. Als Mittel, um dessen Ausgangslicht in das Medium 10 einzukoppeln, dient beispielsweise ein Lichtwellenleiterkoppler 7 dessen einer Ausgang mit dem Lichtwellenleiterstück 8 verbunden ist, dessen zweiter Anschluß mit dem Ausgang des Lasers 2 verbunden ist und dessen dritter Anschluß über ein Lichtwellenleiterstück oder eine Lichtwellenleiterstrecke 80 mit dem Ausgang des dritten Lasers 3 verbunden ist.

Die Wellenlänge λ₃ des vom dritten Laser 3 erzeugten Lichts ist so gewählt, daß abhängig von der Intensität dieses Lichts die Verstärkung des Lichts mit der Wellenlänge λ₂ vom zweiten Laser 2, die im optischen Verstärker 20 aufgrund des Pumplichts erfolgt, steuerbar ist.

Wie dies funktioniert, wird anhand von Fig. 2 für das Beispiel, daß die laseraktive Substanz das in einem Lichtwellenleiterstück enthaltene Dotiermaterial Er³⁺ ist .

Durch kontinuierliches Bestrahlen mit Licht aus dem ersten Laser 1, das eine erste Wellenlänge λ₁ = 980 nm hat, werden die Elektronen von dem Grundniveau ⁴I_{15/2} auf ein erstes Energieniveau, das Energieniveau ⁴I_{11/2}, angeregt. Dieses Energieniveau zerfällt durch Strahlung von Licht der Wellenlänge 2700 nm in ein zweites Energieniveau, das metastabile Energieniveau ⁴I_{13/2}. Das Licht der Wellenlänge 2700 nm wird entweder in dem Lichtwellenleiterstück 10 selbst oder in den sich daran anschließenden Lichtwellenleitern 6, 8 absorbiert.

Wenn nun Licht auf die laseraktive Substanz auftrift, dessen Energie der Energiedifferenz zwischen dem zweiten Energieniveau und einem noch niedrigeren dritten Energieniveau entspricht, welches im Falle von Er³⁺ das Grundniveau ist, geht die laseraktive Substanz unter induzierter Emission von Photonen in das dritte Energieniveau über, wodurch das auf die laseraktive Substanz auftreffende Licht verstärkt wird. Die der genannten Energiedifferenz entsprechende Wellenlänge ist λ₂ = 1550 nm. Neben dieser induzierten Emission von Licht mit der Wellenlänge λ₂ gibt es auch eine spontane Emission von Licht derselben Wellenlänge, wodurch die Elektronen von dem Energieniveau ⁴I_{13/2} in das Grundniveau ⁴I_{15/2} zurückkehren, das ein drittes Energieniveau bildet. Bei Einstrahlung von Licht der zweiten Wellenlänge λ₂ aus dem zweiten Laser 2 findet dieser Übergang jedoch zu einem überwiegenden Anteil durch induzierte Emission statt. Soweit bis hierher beschrieben, handelt es sich um die bekannte Verstärkung von Licht der Wellenlänge 1550 nm in einem mit Pumplicht der Wellenlänge 980 nm gepumpten faseroptischen Verstärker mit Er³⁺-dotiertem Lichtwellenleiterstück.

Wenn zusätzlich Licht einer dritten Wellenlänge λ₃ aus dem dritten Laser 3 in das Lichtwellenleiterstück 1 eingestrahlt wird, die der Energiedifferenz zwischen dem zweiten Energieniveau ⁴I_{13/2} und einem höheren Energieniveau entspricht, wird die Emission des Lichts der Wellenlänge λ₂ = 1550 nm beeinflußt. Durch Absorption des Lichts aus dem dritten Laser 3 geht ein großer Teil der Elektronen, die das Energieniveau ⁴I_{13/2} besetzen, in das höhere Energieniveau über, was dazu führt, daß sich die Anzahl der Elektronen deutlich verringert, die von dem zweiten Energieniveau ⁴I_{13/2} auf das dritte Energieniveau, das Grundniveau ⁴I_{15/2}, gelangen. Insbesondere vermindert sich die induzierte Emission bei der Wellenlänge 1550 nm. Auf diese Weise wird gemäß der Erfindung die an sich bekannte Absorption von angeregten Zuständen (excited state absorption (ESA)) ausgenutzt zum Steuern der Verstärkung von Licht der Wellenlänge λ₂.

Die Absorption von dem angeregten Zustand ⁴I_{13/2} ist für einen Laser, dessen laseraktive Substanz aus Er³⁺-Ionen besteht, die als Dotiermittel in einem Fluorzirkonat-Lichtwellenleiterstück enthalten sind, bekannt aus: C.A. Millar et al: "Efficient Up-Conversion Pumping at 800 nm of an Erbium-Doped Fluoride Fibre Laser Operating at 850 nm", Electronics Letters, 25th October 1990, Vol. 26 No. 22, Seiten 1871 bis 1873. Genutzt wird sie dort zur Besetzung eines noch höheren Energieniveaus, um eine spontane Emission, die von diesem noch höheren Energieniveau ausgeht, zu ermöglichen. Die genannte Absorption dient also zum Pumpen auf ein höheres Energieniveau von einem durch ein erstes Pumpen besetzten Energieniveau.

Im Zusammenhang mit faseroptischen Verstärkern ist die Absorption von einem angeregten Zustand bekannt aus W.J. Miniscalco: "Erbium-Doped Glasses for Fiber Amplifiers at 1500 nm", Journal of Lightwave Technology, VOL. 9, NO. 2, February 1991, Seiten 234 bis 250. Genutzt wird sie dort überhaupt nicht, sondern sie wird als ein für die Verstärkungseffizienz schädlicher Verlustmechanismus betrachtet (S. 235, rechte Spalte, zweiter Absatz).

Um durch Absorption Übergänge auf ein höheres Energieniveau, das Energieniveau ⁴S_{3/2}, zu bewirken, strahlt der dritte Laser 3 Licht der dritten Wellenlänge λ₃ = 850 nm aus; diese entspricht der Energiedifferenz zwischen den Energieniveaus ⁴I_{13/2} und ⁴S_{3/2}.

Die Intensität des Lichts, das über das Lichtwellenleiterstück 6 und den Lichtwellenleiterkoppler 5 aus dem Lichtwellenleiterstück 10 in den Lichtwellenleiter 9 ausgestrahlt wird, hängt aufgrund der Absorption, die Übergänge von dem Energieniveau ⁴I_{13/2} in das Energieniveau ⁴S_{3/2} bewirkt, bei konstanter Einstrahlung von Licht aus dem ersten Laser 1 und dem zweiten Laser 2 davon ab, ob der dritte Laser 3 eingeschaltet ist und welche Intensität das von ihm emittierte Licht hat. Durch die Änderung der Intensität des aus dem dritten Laser 3 in das Lichtwellenleiterstück 10 eingestrahlten Lichts läßt sich somit die Verstärkung des von dem zweiten Laser 2 gesendeten Lichts steuern.

Die Anordnung des ersten Lasers 1 und des dritten Lasers 3 gegenüber dem Lichtwellenleiterstück 10 ist vertauschbar. Auch läßt sich das Licht aller drei Laser 1 bis 3 über einen einzigen Lichtwellenleiterkoppler in das Lichtwellenleiterstück 8 einspeisen. Oder das Licht aus dem ersten Laser 1 und dem dritten Laser 3 wird gemeinsam entgegen der Übertragungsrichtung des Lichts aus dem zweiten Laser 2 in das Lichtwellenleiterstück 10 eingespeist.

Die Laser 1 bis 3 sind vorzugsweise Halbleiterlaser, deren Zusammensetzung sich entsprechend der Wellenlänge ergibt, die sie ausstrahlen sollen. In dem hier gewählten Ausführungsbeispiel ist der erste Laser 1 ein InGaAs/GaAs-Halbleiterlaser, der zweite Laser 2 ein InGaAsP/InP-Halbleiterlaser und der dritte Laser 3 ein GaAlAs/GaAs-Halbleiterlaser.

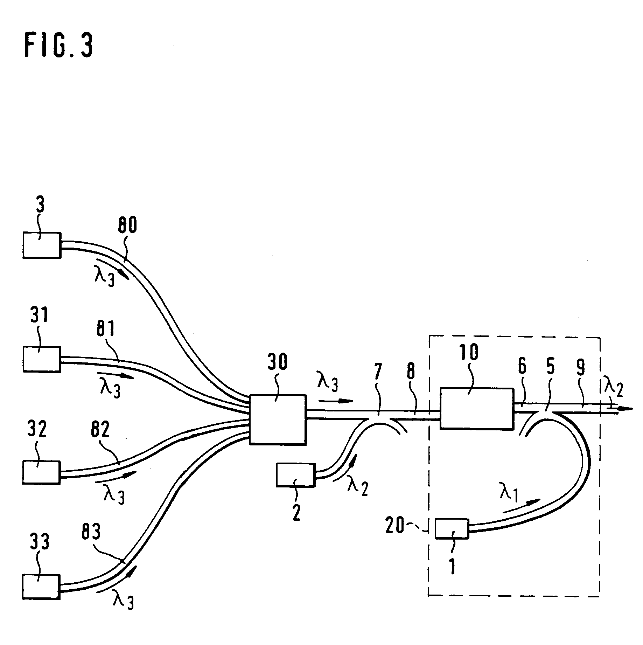

Eine Weiterbildung des optischen Systems nach Fig. 1 ist in Fig. 3 dargestellt. Außer den bereits in Fig. 1 enthaltenen Systemteilen hat diese neben dem dritten Laser 3 weitere Laser 31, 32, 33. Die Laser 3, 31, 32, 33 sind jeweils über Lichtwellenleiter 80, 81, 82, 83 mit einem optischen Multiplexer 30 verbunden, in den sie jeweils Lichtsignale mit der Wellenlänge λ₃ einstrahlen.

Derartige optische Multiplexer sind an sich bekannt, z.B. aus der EP 0 200 613 B1.

Der Multiplexer 30 erzeugt aus den Lichtsignalen ein Multiplex-Lichtsignal, durch das die Verstärkung von Licht der Wellenlänge λ₂ steuerbar ist, ebenso wie sie im ersten Ausführungsbeispiel durch Licht vom dritten Laser 3 steuerbar ist. Dadurch kann die Wellenlänge λ₃ des optischen Multiplexsignals in dem Lichtwellenleiterstück 10 zu der Wellenlänge λ₂ konvertiert werden, so daß es über den Lichtwellenleiter 9 über große Entfernungen mit nur geringer Dämpfung übertragen werden kann.

Im Vorstehenden wurde erläutert, daß das neue optische System die Möglichkeit bietet, die Verstärkung von Licht in einem optischen Verstärker durch Licht aus einem weiteren Laser, "dritter Laser" genannt, zu steuern. Das optische System muß nicht ein optisches Nachrichtenübertragungssystem sein, sondern kann irgendein beliebiges System sein, bei dem eine Steuerung der Verstärkung von Licht in einem optischen Verstärker nützlich ist.

Wendet man das neue optische System für die optische Nachrichtenübertragung an, so ergeben sich die folgenden interessanten Möglichkeiten:

Wenn der dritte Laser 3 nicht kontinuierlich Licht, sondern Lichtsignale, also moduliertes Licht, emittiert, dagegen der zweite Laser 2 kontinuierlich Licht, d.h. unmoduliertes Licht, emittiert, so läßt sich das neue optische System als ein optisches Nachrichtenübertragungssystem einsetzen, in dem die Wellenlänge des übertragenen optischen Signals umgewandelt wird. Der dritte Laser 3 wird in diesem Falle als Sendelaser bezeichnet. Wenn er z.B. aus einem elektrischen digitalen Signal ein entsprechendes Lichtsignal mit der Wellenlänge λ₃ = 850 nm erzeugt, so ändert sich entsprechend die induzierte Emission von Licht mit der Wellenlänge λ₂ = 1550 nm nahezu trägheitslos genau umgekehrt zur Einstrahlung des Lichtsignals aus dem dritten Laser 3. Dadurch geht die Modulation` die in dem vom Sendelaser 3 gesendeten Licht enthalten ist, über in eine Modulation des am Ausgang des optischen Verstärkers austretenden Lichts mit der Wellenlänge λ₂. In anderen Worten: Aus Signal-Licht mit der Wellenlänge λ₃ entsteht Signal-Licht mit der Wellenlänge λ₂.

Eine inhärente Eigenschaft des neuen optischen Systems ist, daß es nicht nur als optischer Wellenlängenkonverter, sondern gleichzeitig als optischer Inverter wirkt. Einem "0"- oder "1"- Wert eines Bits des digitalen elektrischen Modulationssignals des Sendelasers 3 entspricht ein "1"-bzw. "0"- Wert des entsprechenden Bits des digital modulierten Lichtsignals, das aus dem Lichtwellenleiterstück 10 emittiert wird. Über den Lichtwellenleiter 9 wird das durch Wellenlängenumwandlung entstandene Lichtsignal mit der Wellenlänge λ₂ zu einem nicht gezeigten Empfänger übertragen. Daß dort eine Invertierung des empfangenen Digitalsignals erforderlich ist, bedeutet einen nur unerheblichen Aufwand.

In Fig.4 ist die vorstehend beschriebene Ausgestaltung des neuen optischen Systems als optisches Übertragungssystem, das eine Wellenlängenkonversion bewirkt, veranschaulicht. Der Sendelaser 3 ist vom optischen Verstärker 20 weit entfernt lokalisiert, was durch den dazwischen verlaufenden Lichtwellenleiter 80 angedeutet ist. Der verstärkbares Licht mit der Wellenlänge λ₂ erzeugende zweite Laser 2 ist vorzugsweise beim optischen Verstärker 20 angeordnet. Er erzeugt unmoduliertes Licht.

Der optische Verstärker ist vorzugsweise ein faseroptischer Verstärker mit einem Lichtwellenleiterstück 10, das beispielsweise ein Er³⁺-dotiertes Lichtwellenleiterstück ist. Im übrigen sind dieselben Bezugszeichen wie bei den entsprechenden Systemteilen des in Fig. 1 gezeigten Systems verwendet, so daß eine nähere Erläuterung sich erübrigt.

Wesentlich ist, daß als Sendelaser 3 ein preisgünstiger 850 nm - Laser verwendet werden kann, und daß erfindungsgemäß die Wellenlänge des von ihm ausgesandten optischen Signals in eine Wellenlänge von 1550nm umgewandelt wird, die für die Weiterübertragung über eine große Lichtwellenleiterstrecke die geeignete Wellenlänge ist.

Dieser Vorteil tritt noch deutlicher hervor, wenn, wie in Fig. 4 gestrichelt angedeutet ist, mehrere Sendelaser 3, 31, 32, 33 vorhanden sind, die Lichtsignale mit der Wellenlänge von 850 nm emittieren. In einem Multiplexer 30 werden diese dann zu einem Multiplex-Lichtsignal zusammengefaßt, und im faseroptischen Verstärker 20 wird dessen Wellenlänge in die Wellenlänge 1550 nm konvertiert. Dies läßt sich in einem optischen Nachrichtenübertragungssystem nutzen, in dem eine Vielzahl von nahe beieinander liegenden Teilnehmern ihre Sende-Signale über einen Lichtwellenleiter zu einer Zentrale senden sollen. Die Erfindung ermöglicht es, daß die Vielzahl von Sendelasern bei den Teilnehmern kostengünstige Laser sein können und nur ein einziger teuerer 1550nm-Laser, der Laser 2 beim faseroptischen Verstärker 20, erforderlich ist, um dem zu übertragenden Multiplexsignal die gewünschten Wellenlänge λ₂ zu geben, die für die Weiterübertragung über eine große Lichtwellenleiterstrecke geeignet ist.

Fig.5 zeigt einen anderen Anwendungsfall für das erfindungsgemäße optische System nach Fig.1 oder das nach Fig. 3. Hier ist der zweite Laser 2 der das im optischen Verstärker 20 verstärkbare Licht erzeugt, ein Sendelaser eines optischen Nachrichtenübertragungssystems, d.h. sein Ausgangslicht ist ein optisches Signal, also mit einem elektrischen Nachrichtensignal moduliertes Licht. Um dies augenfällig zu machen, ist er als räumlich weit entfernt vom optischen Verstärker 20 im System angeordneter Laser 2 dargestellt, der mit dem optischen Verstärker 20 über einen Lichtwellenleiter 85 verbunden ist.

Der erfindungsgemäß vorhandene dritte Laser 3 bietet hier die Möglichkeit, die Verstärkung des zu übertragenden optischen Signals mit der Wellenlänge λ₂ zu steuern. Für jegliche Anwendungsfälle, bei denen eine Steuerung der Verstärkung eines optischen Signals in einem optischen Verstärker nützlich ist, ist die Erfindung also einsetzbar.

Da man mit dem dritten Laser 3 die Verstärkung steuern kann, ist es auch möglich, dem übertragenen optischen Signal mit der Wellenlänge λ₂ eine zusätzliche Amplitudenmodulation aufzuprägen, wenn man das die Verstärkung steuerende Ausgangslicht des Lasers 3 entsprechend moduliert. Ein Anwendungfall dafür kann sein: die Übertragung eines Zusatzsignals, beispielsweise aus einem Dienstkanal, zusätzlich zu dem in erster Linie zu übertragenden optischen Signal.

Statt eines einzigen Lasers 3, der Licht mit der Wellenlänge λ₃ erzeugt, können mehrere solcher Laser vorhanden sein, wie es mit Lasern 31, 32, 33 gestrichelt angedeutet ist, deren Ausgangs-Lichtsignale wie in Fig. 3 gezeigt alle dieselbe Wellenlänge λ₃ haben und in einem Multiplexer 30 zu einem Multiplex-Signal zusammengefaßt werden. Dadurch ist es möglich, die Verstärkung des optischen Signals mit der Wellenlänge λ₂ durch mehrere voneinander unabhängige Signale zu steuern oder dem optischen Signal mit der Wellenlänge λ₂ ein aus mehreren Teilsignalen bestehendes Multiplexsignal zusätzlich aufzumodulieren.

## Patentansprüche

1. Optisches System mit einem optischen Verstärker (20), der eine laseraktive Substanz (10) und einem Pumplicht mit einer ersten Wellenlänge (λ₁) für die laseraktive Substanz (10) erzeugenden ersten Laser (1) enthält,
- mit einem zweiten Laser (2), der Licht mit einer zweiten Wellenlänge (λ₂) erzeugt, die so gewählt ist, daß dieses Licht im optischen Verstärker (20) verstärkbar ist und
- mit Mitteln (7, 8; 85, 8), um das Licht mit der zweiten Wellenlänge (λ₂) in den optischen Verstärker (20) einzukoppeln,
**dadurch gekennzeichnet**,
- daß er einen dritten Laser (3) enthält, der Licht mit einer dritten Wellenlänge (λ₃) erzeugt, und Mittel (80, 7, 8), um dieses Licht ebenfalls in den optischen Verstärker (20) einzukoppeln, und
- daß die dritte Wellenlänge (λ₃) so gewählt ist, daß durch Absorption von Licht mit der dritten Wellenlänge in der laseraktiven Substanz (10) Übergänge von einem metastabilen Engergiezustand, dessen Besetzung durch Absorption von Pumplicht (λ₁) zustande kommt, in einen höheren Energiezustand stattfinden und dadurch die Besetzung des metastabilen Zustandes und die aufgrund des Pumplichts (λ₁) erfolgende Verstärkung des Lichts mit der zweiten Wellenlänge (λ₂) in Abhängigkeit von der Intensität des Lichts mit der dritten Wellenlänge (λ₃) steuerbar ist.

2. Optisches System nach Anspruch 1, dadurch gekennzeichnet,
- daß der zeite Laser (2) unmoduliertes Licht mit der zweiten Wellenlänge (λ₂) aussendet, und
- daß der dritte Laser (3) Licht mit der dritten Wellenlänge (λ₃) aussendet, das durch Nachrichtensignale in seiner Intensität moduliert ist, so daß durch die davon abhängige Verstärkung des Lichts mit der zweiten Wellenlänge (λ₂) das vom dritten Laser (3) ausgesendete Lichtsignal in ein Lichtsignal mit der zweiten Wellenlänge (λ₂) umgewandelt wird.

3. Optisches System nach Anspruch 1, bei dem der zweite Laser (2) Licht aussendet, das durch Nachrichtensignale moduliert ist, dadurch gekennzeichnet, daß der dritte Laser (3) Licht mit gesteuerter oder modulierter Intensität aussendet, so daß in Abhängigkeit davon die im optischen Verstärker (20) erfolgende Verstärkung des die Nachrichtensignale enthaltenden Lichts mit der zweiten Wellenlänge (λ₂) steuerbar oder modulierbar ist.

4. Optisches System nach Anspruch 1, dadurch gekennzeichnet, daß weitere Laser (31, 32, 33) vorhanden sind, deren Licht die dritte Wellenlänge (λ₃) hat, daß der dritte Laser (3) und die weiteren Laser (31, 32, 33) über jeweils einen Lichtwellenleiter (80, 81, 82, 83) mit einem optischen Multiplexer (30) verbunden sind und daß der optische Multiplexer (30) mit dem optischen Verstärker (20) verbunden ist.

5. Optisches System nach Anspruch 4, dadurch gekennzeichnet,
- daß der zweite Laser (2) unmoduliertes Licht mit der zweiten Wellenlänge (λ₂) aussendet,
- daß der dritte Laser (3) und die weiteren Laser (31, 32, 33) als mehrere Sendelaser jeweils Lichtsignale mit der dritten Wellenlänge (λ₃) über den optischen Multiplexer (30) zu dem optischen Verstärker (20) senden, so daß das im optischen Multiplexer gebildete optische Multiplexsignal mit der dritten Wellenlänge (λ₃) die im optischen Verstärker (20) stattfindende Verstärkung des Lichts mit der zweiten Wellenlänge (λ₂) steuert und dadurch in ein optisches Multiplexsignal mit der zweiten Wellenlänge (λ₂) umgewandelt wird.

6. Optisches System nach Anspruch 4, bei dem der zweite Laser (2) Licht aussendet, das durch Nachrichtensignale moduliert ist, dadurch gekennzeichnet,
- daß der dritte Laser (3) und die weiteren Laser (31, 32, 33) jeweils Licht mit gesteuerter oder modulierter Intensität über den optischen Multiplexer (30) zu dem optischen Verstärker (20) senden, so daß das im optischen Multiplexer (20) gebildete optische Multiplexsignal mit der dritten Wellenlänge (λ₃) die im optischen Verstärker (20) stattfindende Verstärkung des die Nachrichtensignale enthaltenden Lichts steuert bzw. ihm seinen Nachrichteninhalt aufmoduliert.

7. System nach einem der vorstehenden Ansprüche, dadurch gekennzeichnet, daß der erste Laser (1) ein InGaAs/GaAs-Halbleiterlaser, der zweite Laser (2) ein InGaAsP/InP-Halbleiterlaser und der dritte Laser (3) ein GaA1As/GaAs-Halbleiterlaser ist.

## Claims

1. Optical system with an optical amplifier (20) which includes a laser substance (10) and a first laser (1) generating pumping light having a first wavelength (λ₁) for the laser substance (10),
- with a second laser (2) which generates light having a second wavelength (λ₂) which is selected so that this light is capable of being amplified in the optical amplifier (20) and
- with means (7, 8; 85, 8) for coupling the light having the second wavelength (λ₂) into the optical amplifier (20),
characterized in that
- it includes a third laser (3) which generates light having a third wavelength (λ₃) and means (80, 7, 8) for coupling this light, likewise, into the optical amplifier (20) and
- in that the third wavelength (λ₃) is selected so that, through absorption of light having the third wavelength, transitions occur in the laser substance (10) from a metastable energy state, the population of which occurs through absorption of pumping light (λ₁), to a higher energy state and by this means it is possible to control the population of the metastable state and the amplification, resulting from the pumping light (λ₁), of the light having the second wavelength (λ₂) as a function of the intensity of the light having the third wavelength (λ₃).

2. Optical system according to Claim 1, characterized in that
- the second laser (2) emits unmodulated light having the second wavelength (λ₂) and
- that the third laser (3) emits light, having the third wavelength (λ₃), the intensity of which is modulated by information signals so that, through the amplification, dependent on this intensity, of the light having the second wavelength (λ₂), the light signal emitted from the third laser (3) is converted into a light signal having the second wavelength (λ₂).

3. Optical system according to Claim 1, in which the second laser (2) emits light which is modulated by information signals, characterized in that the third laser (3) emits light having a controlled or modulated intensity so that the amplification in the optical amplifier (20) of the light having the wavelength (λ₂) and containing the information signals can be controlled or modulated as a function of this intensity.

4. Optical system according to Claim 1, characterized in that there are further lasers (31, 32, 33), their light having the third wavelength (λ₃), that the third laser (3) and the further lasers (31, 32, 33) are each connected to an optical multiplexer (30) by an optical waveguide (80, 81, 82, 83) and that the optical multiplexer (30) is connected to the optical amplifier (20).

5. Optical system according to Claim 4, characterized in that
- the second laser (2) emits unmodulated light having the second wavelength (λ₂),
- the third laser (3) and the further lasers (31, 32, 33), as several transmitting lasers, each transmit light signals having the third wavelength (λ₃) to the optical amplifier (20) through the optical multiplexer (30), so that the optical multiplex signal having the third wavelength (λ₃) formed within the optical multiplexer controls the amplification, effected within the optical amplifier (20), of the light having the second wavelength (λ₂) and is thereby converted into an optical multiplex signal having the second wavelength (λ₂).

6. Optical system according to Claim 4, in which the second laser emits light which is modulated by information signals, characterized in that
- the third laser (3) and the further lasers (31, 32, 33) each transmit light having a controlled or modulated intensity to the optical amplifier (20) through the optical multiplexer (30), so that the optical multiplex signal having the third wavelength (λ₃) formed within the optical multiplexer (20) controls the amplification, effected in the optical amplifier (20), of the light containing the information signals or modulates its information content upon it.

7. System according to any one of the preceding Claims, characterized in that the first laser (1) is an InGaAs/GaAs semiconductor laser, the second laser (2) is an InGaAsP/InP semiconductor laser and the third laser (3) is a GaAlAs/GaAs semiconductor laser.

## Revendications

1. Système optique comportant un amplificateur optique (20) qui contient une substance (10) à activité laser et un premier laser (1) produisant une lumière de pompage optique d'une première longueur d'onde (λ₁) pour la substance (10) à activité laser,
- comportant un second laser (2) qui produit de la lumière d'une seconde longueur d'onde (λ₂) qui est choisie de façon que cette lumière puisse être amplifiée dans l'amplificateur optique (20) et
- comportant des moyens (7, 8; 85, 8) pour coupler la lumière de la seconde longueur d'onde (λ₂) dans l'amplificateur optique (20),
caractérisé
- par le fait qu'il contient un troisième laser (3) qui produit de la lumière d'une troisième longueur d'onde (λ₃), ainsi que des moyens (80, 7, 8) pour coupler également cette lumière dans l'amplificateur optique (20), et
- par le fait que la troisième longueur d'onde (λ₃) est choisie de façon que, par absorption de la lumière de la troisième longueur d'onde dans la substance (10) à activité laser, il se produise des transitions pour passer d'un état d'énergie métastable, dont le peuplement se fait par absorption de la lumière de pompage optique (λ₁), à un état d'énergie plus élevé et que de ce fait le peuplement de l'état métastable et l'amplification, qui en résulte du fait de la lumière de pompage optique (λ₁), de la lumière de la seconde longueur d'onde (λ₂) puisse être pilotée en fonction de l'intensité de la lumière de la troisième longueur d'onde (λ₃).

2. Système optique selon la revendication 1, caractérisé
- par le fait que le second laser (2) émet de la lumière non modulée de la seconde longueur d'onde (λ₂), et
- par le fait que le troisième laser (3) émet de la lumière de la troisième longueur d'onde (λ₃) dont l'intensité est modulée par des signaux d'information, de sorte que, du fait de l'amplification, qui en résulte, de la lumière de la seconde longueur d'onde (λ₂), le signal lumineux émis par le troisième laser (3) est converti en un signal lumineux de la seconde longueur d'onde (λ₂).

3. Système optique selon la revendication 1, dans le cas duquel le second laser (2) émet de la lumière qui est modulée par des signaux d'information, caractérisé par le fait que le troisième laser (3) émet de la lumière à intensité pilotée ou modulée, de sorte qu'en fonction de ceci, l'amplification, qui se fait dans l'amplificateur optique (20), de la lumière, contenant des signaux d'information, de la seconde longueur d'onde (λ₂), puisse être pilotée ou modulée.

4. Système optique selon la revendication 1, caractérisé par le fait qu'il y a d'autres lasers (31, 32, 33) dont la lumière a la troisième longueur d'onde (λ₃), que le troisième laser (3) et les autres lasers (31, 32, 33) sont reliés à un multiplexeur optique (30) par l'intermédiaire de, chacun, un guide d'ondes lumineuses (80, 81, 82, 83) et que le multiplexeur optique (30) est relié à l'amplificateur optique (20).

5. Système optique selon la revendication 4, caractérisé
- par le fait que le second laser (2) émet de la lumière non modulée de la seconde longueur d'onde (λ₂),
- par le fait que le troisième laser (3) et les autres lasers (31, 32, 33), intervenant sous forme de plusieurs lasers émetteurs, envoient, chacun, à l'amplificateur optique (20), par l'intermédiaire du multiplexeur optique (30), des signaux lumineux de la troisième longueur d'onde (λ₃), de sorte que le signal optique multiplexé, formé dans le multiplexeur optique, de la troisième longueur d'onde (λ₃) pilote l'amplification, qui se produit dans l'amplificateur optique (20), de la lumière de la seconde longueur d'onde (λ₂), et que de ce fait il est converti en un signal optique multiplexé de la seconde longueur d'onde (λ₂).

6. Système optique selon la revendication 4, dans le cas duquel le second laser (2) émet de la lumière qui est modulée par des signaux d'information, caractérisé
- par le fait que le troisième laser (3) et les autres lasers (31, 32, 33) envoient chacun, à l'amplificateur optique (20) par l'intermédiaire du multiplexeur optique (30), de la lumière d'intensité pilotée ou modulée, de sorte que le signal optique multiplexé, formé dans le multiplexeur optique (20), de la troisième longueur d'onde (λ₃), pilote l'amplification, qui se produit dans l'amplificateur optique (20), des signaux d'information ou en surmodule le contenu d'information.

7. Système selon l'une des revendications précédentes, caractérisé par le fait que le premier laser est un laser à semiconducteur InGaAs/GaAs, le second laser ((2) est un laser à semiconducteur InGaAsP/ImP et le troisième laser (3) est un laser à semiconducteur GaAlAs/GaAs.
